# EUROPÄISCHE PATENTSCHRIFT

(11) **EP 1 346 465 B1**
(45) Veröffentlichungstag und Bekanntmachung des Hinweises auf die Patenterteilung: **26.09.2012**
(21) Anmeldenummer: 01989421.1
(22) Anmeldetag: 20.12.2001
(51) Int. Cl.: H02P 8/42, H02P 6/00

(54) **VERFAHREN ZUM VERSTELLEN EINES TEILS**
METHOD FOR ADJUSTING A PART
PROCEDE POUR DEPLACER UNE PIECE

(30) Priorität: 20.12.2000 DE 10063441
(43) Veröffentlichungstag der Anmeldung: 24.09.2003
(73) Patentinhaber: ROBERT BOSCH GMBH, 70442 Stuttgart (DE)
(72) Erfinder: ASCHOFF, Joerg, 77815 Buehl (DE); MACK, Rolf, 76547 Sinzheim (DE); BERGER, Guenter, 77815 Buehl-Kappelwinde (DE); MEYER, Christian, 76228 Karlsruhe-Wolfartsweier (DE)
(86) Internationale Anmeldenummer: PCT/DE2001/004830
(87) Internationale Veröffentlichungsnummer: WO 2002/050991

(56) Entgegenhaltungen:
- EP-A- 0 066 159
- EP-A- 0 584 772
- DE-A- 4 316 292

## Beschreibung

### Stand der Technik

Die Erfindung betrifft ein Verfahren zum Verstellen eines Teils, das mittels eines bürstenlosen DC-Motors verstellt wird nach der Gattung des unabhängigen Anspruchs.

Die DE 43 16 292 A1 zeigt einen kollektorlosen Gleichstrommotor, der im Normalbetrieb mit einer Schrittfrequenz einer entsprechend vorgegebenen Drehzahl betrieben wird. Zur Ansteuerung der Statorspulen ist während des gesamten Betriebs eine Einrichtung zur Lageerkennung vorgesehen, die drei Hall-Sensoren aufweist.

Mit der JP 082 84 526 A ist eine Antriebseinrichtung für eine automatisch verstellbare Tür bekannt geworden, die mittels eines bürstenlosen DC-Motors betrieben wird. Dabei wird die Position der Tür mit dem Signal eines magnetischen Lagesensors gesteuert. Die Drehzahl des Motors wird durch Variation der Anzahl der Pole des Motors geregelt und auf eine Maximaldrehzahl begrenzt.

Will man nun mit solch einem bürstenlosen DC-Motor beispielsweise ein Stellglied eines Kraftfahrzeuges verstellen, so ergibt sich das Problem, dass für diese Anwendung keine ausreichende Positionierungsgenauigkeit erzielt werden kann.

### Vorteile der Erfindung

Das erfindungsgemäße Verfahren mit den Merkmalen des Hauptanspruchs hat den Vorteil, dass das Teil in einer ersten Phase sehr schnell verstellt werden kann und in einer zweiten Phase zur präzisen Positionierung im Schrittmotormodus verstellt werden kann. Besonders vorteilhaft ist beispielsweise für die Verstellung eines Stellglieds der Einsatz eines bürstenlosen Motors, da hierbei trotz hoher Langzeitbeanspruchung keine Verschleißerscheinung von Motorbauteilen (z. B. Bürsten) austritt. Durch die Selbstkommutierung des Motors in der Schnelllaufphase wird ein schneller Vorschub mit hohen möglichen Verstellkräften mit den Vorteilen eines Schrittmotors in der Feinpositionierungsphase vereint.

Durch die in den Unteransprüchen angegebenen Maßnahmen sind vorteilhafte Weiterbildungen des Verfahrens nach dem Hauptanspruch möglich. Beim bürstenlosen DC-Motor ist es besonders günstig und einfach, die Motordrehung mittels eines Lagesensors zu erfassen und dieses Meßsignal direkt der motorinternen Kommutatorsteuerung zuzuführen. Dadurch können die einzelnen Wicklungsphasen sehr präzise und schnell geschaltet werden, was ein hohes Drehmoment und eine hohe Drehzahl in der selbstkommutierten Schnelllaufphase ermöglicht. Besonders angenehm ist dabei auch die geringe Geräuschbelästigung des bürstenlosen DC-Motors. Dabei wird in der Schnelllaufphase für die Positionserfassung nur ein Sensorsignal, und in der Feinpositionierungsphase mindestens zwei Sensorsignale ausgewertet. Dadurch wird in der Schnelllaufphase die Verstellzeit reduziert und auf eine unnötig genaue Positionserfassung verzichtet.

In der selbstkommutierten Schnelllaufphase stellt sich bei vorgegebener Spannung oder Strom die maximale Verstellgeschwindigkeit des Teils sehr schnell ein und wird erst durch die an den Motor anliegende Last begrenzt. Dadurch kann das Teil sehr schnell verstellt werden. Außerdem wird im Motor keine hohe Blindleistung generiert, die über eine aufwendige Kühlung abgeführt werden muß. Deshalb kann der Schnelllaufmodus auch über längere Betriebszeiten aufrecht erhalten werden. Die zur Verfügung stehende Energie wird optimal ausgenutzt, so dass entsprechend der aufzubringenden Verstellkraft die Verstellgeschwindigkeit maximiert wird. Die Drehzahl kann dabei auch mittels Pulsweitenmodulation gesteuert werden.

Andererseits kann der Motor in der Feinpositionierungsphase über die externe Regeleinheit Schritt für Schritt angesteuert werden. Dies ermöglicht eine sehr exakte Positionierung des Teils ohne die Verwendung eines aufwändigen Regelalgorithmusses. Das Teil wird dabei auf den Punkt genau angefahren, ohne überzuschwingen.

Im Schrittmotormodus wird der jeweiligen Wicklungsphase bei jedem Schritt ein bestimmter Strom eingeprägt. Der Betrag dieses Stromes bestimmt das maximal mögliche Drehmoment des Motors. Durch eine Abschätzung dieses maximal aufzubringenden Drehmoments kann der Strom in vorteilhafter Weise derart begrenzt werden, dass im Motor keine unnötig hohe Verlustleistung - und damit Wärme - erzeugt wird.

Dadurch, dass der Übergang zwischen der Schnelllaufphase und der Feinpositionierungsphase mittels eines Speichers der Regeleinheit frei vorgegeben werden kann, können die Phasen immer an die Verstellaufgabe angepaßt werden und die Verstellzeit unter Einhaltung maximaler Positionsgenauigkeit minimiert werden. Somit vereinigt dieses Verstellverfahren in optimaler Weise maximale Verstellgenauigkeit mit minimaler Verstellzeit.

In der Feinpositionierungsphase entspricht die Positionierungsgenauigkeit der Auflösegenauigkeit der Lagesensorik und ist damit deutlich höher als in der Schnelllaufphase, bei der die Positionsgenauigkeit des Regelalgorithmuses um etwa einen Faktor 10 geringer ist, als die Ortsauflösung der Sensorik.

Zur Kommutierung des bürstenlosen DC-Motors werden günstigerweise Hallsensoren verwendet, die im DC-Motor integriert sind. Deren Signale können ebenfalls zur Positionsbestimmung der Regeleinheit zugeführt werden, so dass für die Positionsbestimmung keine zusätzlichen Sensoren notwendig sind. Dies ermöglicht eine kompakte Bauweise des Verstellantriebs und spart Kosten.

Durch die Anpassung der Verstellgeschwindigkeit an die Anzahl der zu verarbeitenden Sensorsignaleingänge der Regeleinheit wird die Verstellzeit des Teils minimiert, was insbesondere für Stellglieder im Kraftfahrzeug von besonderer Bedeutung ist.

Wird mit dem erfindungsgemäßen Verfahren der Kupplungsteller eines Kraftfahrzeugs betätigt, kann hierbei auf ein aufwändiges und komplexes hydraulisches System verzichtet werden. Dies spart Herstellungskosten und Wartungsaufwand bei hoher Verstellgenauigkeit und geringem Verschleiß des Verstellmotors.

Besonders vorteilhaft ist die Anwendung des Verfahrens mit einem direkt am Getriebegehäuse angeordneten DC-Motor, dessen Achse mit der Achse des sich im Getriebegehäuse befindenden Kupplungstellers zusammenfällt. Aufgrund der hohen Verstellgeschwindigkeit, der hohen verfügbaren Verstellkraft und der hohen Positionierungsgenauigkeit des erfindungsgemäßen Systems ist kein übertragungsgestänge vom Verstellmotor zum Kupplungssteller notwendig. Die Anzahl der Bauteile und der Bauraum werden dadurch reduziert. Über die elektronische Regeleinheit hat man somit einen sehr schnellen und direkten Weg, um die Kupplung zu betätigen.

### Zeichnung

In der Zeichnung sind zwei Ausführungsbeispiele eines erfindungsgemäßen Verfahrens dargestellt und in der nachfolgenden Beschreibung näher erläutert. Es zeigen Figur 1 einen bürstenlosen DC-Motor in der Seitenansicht und im Längsschnitt, Figur 2 einen Querschnitt nach der Linie II-II des gleichen Motors, Figur 3 die Beschaltung des Motors, Figur 4 den Verlauf des Verstellweges in zwei Phasen und Figur 5 ein zweites Ausführungsbeispiel zur Anwendung des erfindungsgemäßen Verfahrens.

### Beschreibung

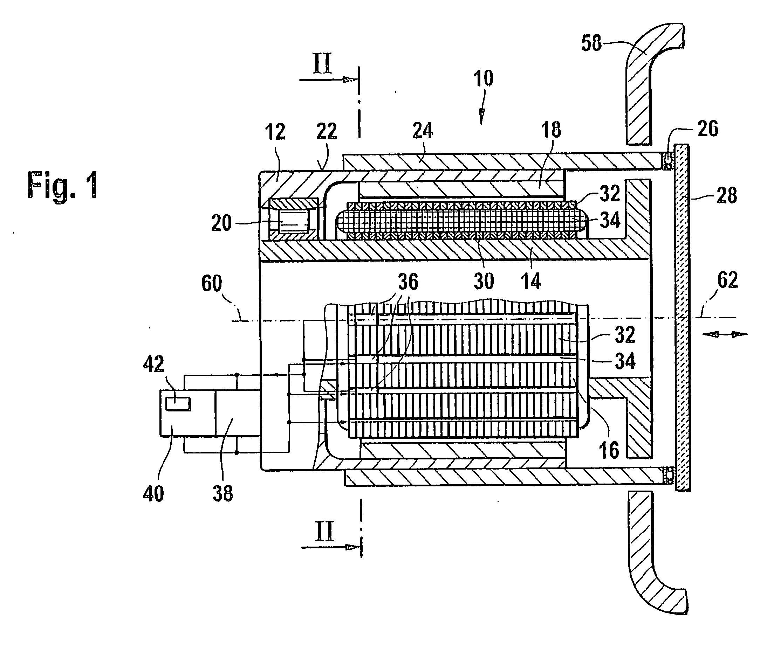

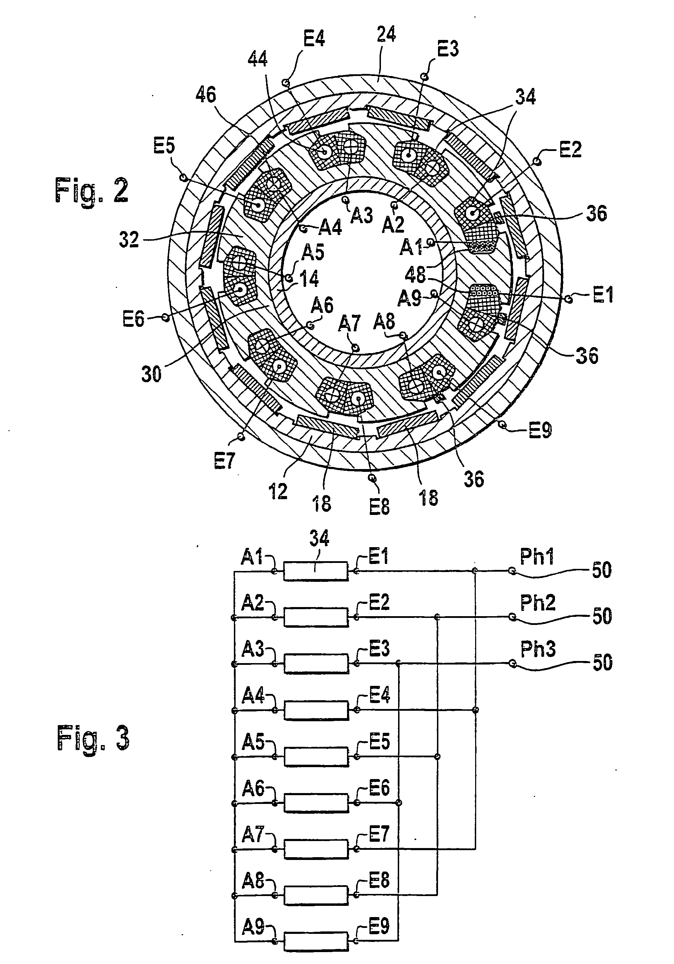

Das in Figur 1 dargestellte Ausführungsbeispiel zur Anwendung des erfindungsgemäßen Verfahrens weist einen bürstenlosen DC-Motor 10 auf, mit einem Rotor 12 als Außenläufer, der um einen fest auf einer Hohlwelle 14 angeordneten Stator 16 bewegbar ist. Der Rotor 12 weist beispielsweise zwölf Permanentmagnetsegmente 18 mit abwechselnder Polung auf und wird mittels eines Lagers 20 an einem Ende des Rotors 12 in seiner Drehung um die Hohlwelle 14 geführt. Die Außenseite 22 des Rotors 12 steht im Eingriff mit einer Hohlspindel 24, die über eine weitere Lagerung 26 einen Kupplungsteller 28 als Stellglied betätigt. Der Ständer 30 des Stators 16 setzt sich aus einzelnen dünnen Blechen zusammen und weist neun Statorlamellen 32 auf. Um diese Lamellen 32 ist jeweils eine Wicklung 34 angeordnet, wie in Figur 2 zu sehen ist. Auf den Wicklungen 34 befinden sich zwischen den Lamellen drei Hallsensoren 36, die die Bewegung des Rotors 12 registrieren. Die Signale der Hallsensoren 36 werden einerseits einer Kommutatorsteuerung 38 zur Selbstkommutierung in der Schnelllaufphase 54, und andererseits einer Regeleinheit 40 für die Feinpositionierungsphase 56 im Schrittmotormodus zugeführt. Die Regeleinheit 40 weist einen Speicher 42 auf, in dem ein Wert 52 für den Übergang zwischen der Schnelllaufphase 54 und der Feinpositioierungsphase 56 abgespeichert wird. Die Kommutatorsteuerung 38 und die Regeleinheit 40 wiederum steuern die Stromversorgung der Motorwicklungen 34.

Die Anordnung der Motorwicklungen 34 ist in einem Querschnitt des DC-Motors 10 in Figur 2 dargestellt. Um jede der neun Lamellen 32 des Ständers 30 ist jeweils eine Wicklung 34 angeordnet. Die Eingänge der Wicklungen 34 sind mit E1 bis E9 bezeichnet, die Ausgänge derselben mit A1 bis A9. Die Stromrichtung in den Wicklungen 34 ist mittels eines Punktes 44 und eines Kreuzes 46 dargestellt. Es ist zu erkennen, dass die Umlaufrichtung für alle neun Wicklungen 34 die gleiche ist. Für die Wicklung E1-A1 sind beispielhaft die Querschnitte der einzelnen Wicklungsdrähte 48 mit entsprechender Stromrichtung angedeutet. Auf den Wicklungen 34 sind die Hallsensoren 36 derart angeordnet, daß sie so nah wie möglich an die rotierenden Permanentmagneten 18 des äußeren Rotors 12 heranreichen, ohne dieselben zu berühren.

Figur 3 zeigt die Beschaltung der neun Wicklungen 34 durchnummeriert von 1 bis 9. Die Wicklungen 1, 4, 7 sind parallel geschaltet und werden gleichphasig bestromt. Entsprechend die Wicklungen 2, 5, 8 und 3, 6, 9. Somit erhält man drei Wicklungsphasen 50, die sich jeweils aus drei parallel geschalteten Wicklungen 34 zusammensetzen.

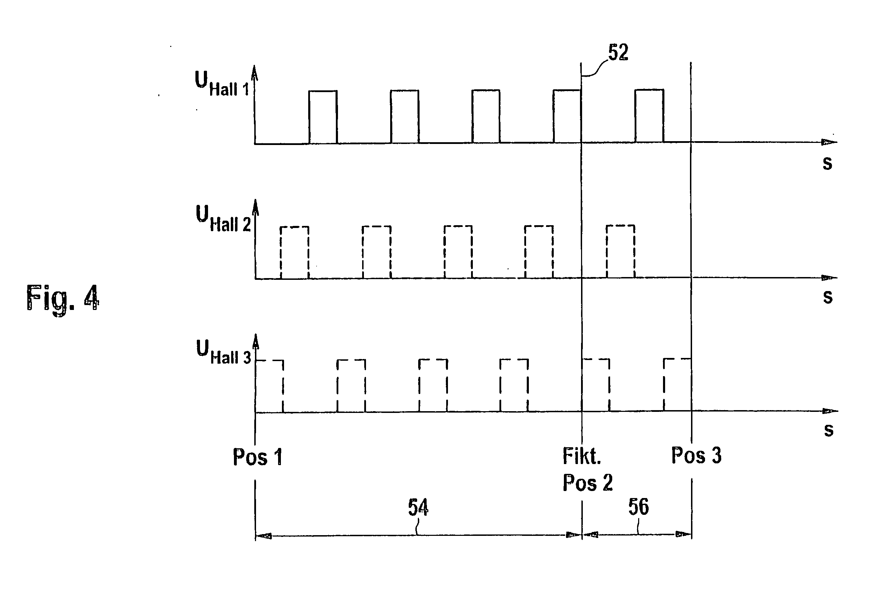

Im folgenden wird das erfindungsgemäße Verfahren anhand des Ausführungsbeispiels näher erläutert. Der Verstellweg wird gemäß Figur 4 in zwei Phasen eingeteilt, indem ein Wert 52 einbgestellt und im Speicher 42 der Regeleinheit 40 abgespeichert wird, der den Übergang zwischen der Schnelllaufphase 54 und der Feinpositionierungsphase 56 definiert. In der Schnelllaufphase 54 wird der DC-Motor 10 selbstkommutiert betrieben, indem die drei Hallsensoren 36 für jeweils eine Wicklungsphase 50 den Übergang zum nächsten Permanentmagneten 18 mit umgekehrter Polung anzeigen. Diese Hallsignale werden der Kommutatorsteuerung 38 zugeführt, die eine Stromumkehr der drei Wicklungen 34 der Wicklungsphase 50 schaltet. Haben sich drei jeweils gleichpolige Permanentmagnete 18 über die drei Wicklungen 34 einer Wicklungsphase 50 hinwegbewegt, gibt der zugehörige Hallsensor 36 wiederum ein Signal an die Kommutatorsteuerung 38, um den Strom der Wicklungsphase 50 umzupolen. Die beiden anderen Wicklungsphasen 50 werden entsprechend phasenversetzt umgepolt. Dabei ist jeweils einer Wicklungsphase 50 ein Hallsensor 36 zugeordnet, so dass man für eine Motorumdrehung mit den zwölf Permanentmagneten 18 insgesamt 3 x 12 Hallsignale erhält, die die Kommutatorsteuerung 38 verarbeitet. Steigert sich die Drehzahl des Rotors 12, erhöht sich automatisch auch die Taktfrequenz der Hallsignale und entsprechend die Umpolung der Wicklungsphasen 50. Bei einer fest vorgegebenen Spannung erhöht sich die Motordrehzahl, und damit die Verstellgeschwindigkeit des Teils 28, so lange, bis sich ein Motorstrom in den Wicklungsphasen 50 entsprechend einer am Motor 10 anliegenden Last einstellt. In der Schnelllaufphase 54 werden alle Hallsignale der jeweiligen Wicklungsphasen 50 in der Kommutatorsteuerung 38 zur Selbstkommutierung verarbeitet, zur Positionserfassung in der Regeleinheit 40 ist ein Hallsignal ausreichend für die hier notwendige Ortsauflösung. Dadurch kann Rechnerkapazität eingespart werden und die Positionserfassung führt daher zu keiner Reduzierung der Verstellgeschwindigkeit in der Schnelllaufphase 54. Ein Hallsignal, das für die Selbstkommutierung notwendig ist, wird also gleichzeitig für die Positionserfassung verwendet. Dadurch sind keine zusätzlichen Positionssensoren notwendig.

Wird der Wert 52 am Übergang in die Feinpositionierungsphase 56 erreicht, wird der DC-Motor 10 im Schrittmotormodus betrieben. Dabei wird jede Stromumkehr der einzelnen Wicklungsphasen 50 einzeln von der Regeleinheit 40 geschaltet. Der Rotor 12 dreht sich dabei nicht kontinuierlich, sondern wird nach jeder Stromumkehr angehalten, bis zur nächsten Umpolung einer Wicklungsphase 50. Die Kommutatorsteuerung 38 hat in der Feinpositionierungsphase 56 keine Funktion. Alle Hall-Sensorsignale werden zur Positionsbestimmung der Regeleinheit 40 zugeführt, so dass eine Motorumdrehung in 36 (3 x 12) diskreten Schritten erfolgt. Die Positionsgenauigkeit des zu verstellenden Teils 28 ist somit identisch mit der Auflösegenauigkeit der Hallsensoren. Die Anzahl der Hallsensoren 36 ist im Ausführungsbeispiel durch die Anzahl der Wicklungsphasen 50 gegeben. Soll die Positionsgenauigkeit im Schrittmotormodus noch stärker erhöht werden, können zusätzliche Wicklungsphasen mit entsprechenden Lagesensoren angeordnet werden. Da sich im Schrittmotormodus kein Gleichgewicht zwischen Motorlast und Motorstrom einstellt, muß hier ein maximal aufzubringendes Drehmoment des DC-Motors 10 abgeschätzt werden und ein entsprechend hoher Strom für die Wicklungsphasen 50 eingeprägt werden. Dies führt zu einer höheren Blindleistung, und damit Wärmeentwicklung, des Motors 10, weshalb die Feinpositionierungsphase 56 so klein wie möglich gewählt wird. Da die Verstellgeschwindigkeit im Schrittmotormodus deutlich geringer ist, ist es auch unter diesem Gesichtspunkt günstig, die Feinpositionierungsphase 56 möglichst klein zu wählen.

Natürlich kann der bürstenlose DC-Motor 10 für das erfindungsgemäße Verfahren vielerlei andere Ausführungsformen aufweisen. So kann der Motor 10 beispielsweise auch als Innenläufer ausgeführt sein, die Anzahl und Ausführung der Magnete 18 (Elektromagnete), der Wicklungen 34 und der Lagesensoren 36 (Feldplatten), als auch die Bauform des Stators 16 und Rotors 12 kann entsprechend der Anwendung variiert werden.

Das Verfahren nach dem Ausführungsbeispiel in Figur 1 wird beispielsweise dazu verwendet, eine Kupplung motorisch zu betätigen. Dazu ist der DC-Motor 10 derart an einem Getriebegehäuse 58 angeordnet, dass die Achse 60 der sich im DC-Motor 10 befindenden Hohlwelle 14 näherungsweise deckungsgleich mit der Achse 62 eines sich im Getriebegehäuse 58 befindlichen Kupplungstellers 28 liegt. Der Kupplungsteller 28 kann dadurch direkt, ohne Verwendung eines mit Spiel behafteten Gestänges, sehr exakt verstellt werden. Die Hohlwelle 14 bietet die Möglichkeit, den in Figur 1 nicht dargestellten Getriebestrang des Verbrennungsmotors in direkter Verlängerung der Achse 62 durch den DC-Motor 10 herauszuführen. Die Elektronik des DC-Motors 10, insbesondere die Kommutatorsteuerung 38 und die Regeleinheit 40, die baulich zu einer Einheit zusammengefaßt sein können, müssen nicht in unmittelbarer Nähe des DC-Motors 10 angeordnet sein. Das erfindungsgemäße Verfahren ist nicht auf eine spezielle Ausführung der Kraftübertragung beschränkt.

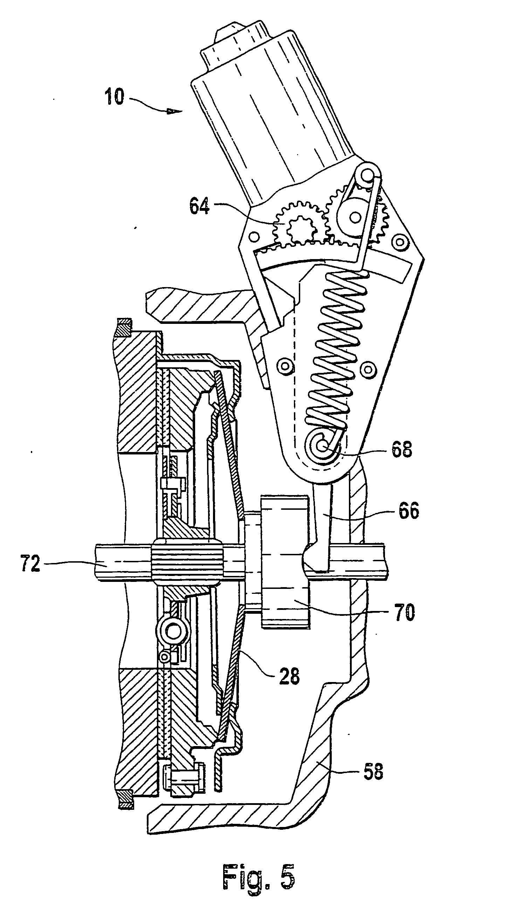

So zeigt Figur 5 ein weiteres Ausführungsbeispiel eines Kupplungstellers nach dem erfindungsgemäßen Verfahren. Der DC-Motor 10 betätigt hierbei über ein Ritzel 64 einen auf einer festen Schwenkachse 68 gelagerten Hebel 66, der ein Ausrücklager 70 und den Kupplungsteller 28 verstellt. Der Antriebsstrang 72 wird hierbei seitlich am DC-Motor 10 vorbei aus dem Getriebegehäuse 58 herausgeführt. Aufgrund des erfindungsgemäßen Verfahrens wird die Kupplung durch große Kraft bei hoher Verstellgeschwindigkeit und hoher Positionsgenauigkeit auch ohne Verwendung eines hydraulischen Systems betätigt.

Natürlich ist das erfindungsgemäße Verfahren nicht auf die Verstellung von Teilen der Kupplung oder des Kraftfahrzeuges (wie Lenkung oder Bremsen) beschränkt, sondern kann überall angewandt werden, wo Teile unter hoher Kraft schnell und exakt verstellt werden müssen.

## Patentansprüche

1. Verfahren zum Verstellen eines Teils (28), das mittels eines bürstenlosen DC-Motors (10) mit mindestens einer
Wicklungsphase (50), mindestens einem Lagesensor (36), einer Kommutatorsteuerung (38) und einer Regeleinheit (40) verstellt wird, wobei das Teil (28), insbesondere ein Stellglied eines
Kraftfahrzeuges, in zwei Phasen bewegt wird, wobei der
DC-Motor (10) in der ersten, Schnelllaufphase (54) selbstkommutiert und in der zweiten,
Feinpositionierungsphase (56) im Schrittmotormodus kommutiert wird,
**dadurch gekennzeichnet, dass**
der Regeleinheit (40) in der Schnelllaufphase (54) nur ein Sensorsignal und in der Feinpositionierungsphase (56) mindestens zwei Sensorsignale zur Positionserfassung zugeführt werden.

2. Verfahren nach Anspruch 1, **dadurch gekennzeichnet, dass** in der selbstkommutierten Schnelllaufphase (54) mittels dem wenigstens einen Lagesensor (36) eine Motordrehung gemessen wird und ein Messsignal der Kommutatorsteuerung (38) zugeführt wird, die automatisch mit der Motordrehung die Stromrichtung der mindestens einen Wicklungsphase (50) schaltet.

3. Verfahren nach einem der Ansprüche 1 oder 2, **dadurch gekennzeichnet, dass** sich in der Schnelllaufphase (54) bei einer vorgegebenen Spannung oder Strom eine maximale
Verstellgeschwindigkeit des Teils (28) aufgrund einer durch die Verstellung anliegenden Motorlast einstellt.

4. Verfahren nach einem der Ansprüche 1 bis 3, **dadurch gekennzeichnet, dass** in der Feinpositionierungsphase (56) jeder Schritt der Motordrehung über die Regeleinheit (40) einzeln angesteuert wird.

5. Verfahren nach einem der Ansprüche 1 bis 4, **dadurch gekennzeichnet, dass** in der Feinpositionierungsphase (56) für jeden Schritt ein bestimmter Strom für die mindestens eine Wicklungsphase (50) eingeprägt wird, der einem maximal aufzubringenden Drehmoment des DC-Motors (10) entspricht.

6. Verfahren nach einem der Ansprüche 1 bis 5, **dadurch gekennzeichnet, dass** zur Festlegung des Übergangs zwischen den beiden Phasen ein veränderbarer, vorgegebener Wert (52) in einem Speicher (42) der
Regeleinheit (40) gespeichert wird.

7. Verfahren nach einem der Ansprüche 1 bis 6, **dadurch gekennzeichnet, dass** das Teil (28) in der
Feinpositionierungsphase (56) mit einer
Positionsgenauigkeit verstellt wird, die der
Auflösungsgenauigkeit des mindestens einen Lagesensors (36) entspricht.

8. Verfahren nach einem der Ansprüche 1 bis 7, **dadurch gekennzeichnet, dass** der DC-Motor (10) mindestens einen
Hallsensor (36) aufweist, dessen Signal einerseits zur bürstenlosen Kommutierung der Kommutatorsteuerung (38), andererseits als Positionssignal der Regeleinheit (40) zugeführt wird.

9. Verfahren nach einem der Ansprüche 1 bis 8, **dadurch gekennzeichnet, dass** bei gegebener Rechnerleistung die
Verstellgeschwindigkeit des Teils (28) auf die zu verarbeitende Sensorsignaleingänge der Regeleinheit (40) angepasst wird.

10. Verfahren nach einem der Ansprüche 1 bis 9, **dadurch gekennzeichnet, dass** mittels des DC-Motors (10) ein
Kupplungsteller (28) direkt ohne Verwendung einer hydraulischen Strecke verstellt wird.

11. Verfahren nach einem der Ansprüche 1 bis 10, **dadurch gekennzeichnet, dass** mittels des DC-Motors (10) ein sich in einem Getriebegehäuse (58) befindender Kupplungsteller (28) verstellt wird, dessen Mittelachse (62) deckungsgleich mit der Achse (60) des direkt an dem
Getriebegehäuse (58) angeordneten DC-Motor (10) liegt.

## Claims

1. Method for adjusting a part (28) which is adjusted by means of a brushless DC motor (10) having at least one winding phase (50), at least one position sensor (36), a commutator controller (38) and a control unit (40), wherein the part (28), in particular an actuator of a motor vehicle, is moved in two phases, wherein the DC motor (10) is self-commutated in the first quick-running phase (54) and is commutated in stepper-motor mode in the second fine-positioning phase (56), **characterized in that** only one sensor signal is supplied to the control unit (40) in the quick-running phase (54) and at least two sensor signals are supplied for position detection in the fine-positioning phase (56).

2. Method according to Claim 1, **characterized in that** a motor rotation is measured in the self-commutated quick-running phase (54) by means of the at least one position sensor (36) and a measurement signal is supplied to the commutator controller (38) which automatically switches the current direction of the at least one winding phase (50) with the motor rotation.

3. Method according to either of Claims 1 and 2, **characterized in that** a maximum adjustment speed of the part (28) is set on account of a motor load which is applied by the adjustment in the quick-running phase (54) at a prespecified voltage or current.

4. Method according to one of Claims 1 to 3, **characterized in that** each step of the motor rotation is individually actuated by means of the control unit (40) in the fine-positioning phase (56).

5. Method according to one of Claims 1 to 4, **characterized in that** a specific current for the at least one winding phase (50) is impressed in the fine-positioning phase (56) for each step, said current corresponding to a maximum applicable torque of the DC motor (10).

6. Method according to one of Claims 1 to 5, **characterized in that** a variable, prespecified value (52) is stored in a memory (42) of the control unit (40) for defining the transition between the two phases.

7. Method according to one of Claims 1 to 6, **characterized in that** the part (28) is adjusted in the fine-positioning phase (56) with a positioning accuracy which corresponds to the resolution accuracy of the at least one position sensor (36).

8. Method according to one of Claims 1 to 7, **characterized in that** the DC motor (10) has at least one Hall sensor (36), the signal from this Hall sensor firstly being supplied to the commutator controller (38) for brushless commutation, and secondly being supplied to the control unit (40) as a position signal.

9. Method according to one of Claims 1 to 8, **characterized in that** the adjustment speed of the part (28) is matched to the sensor signal inputs, which are to be processed, of the control unit (40) at a given computer power.

10. Method according to one of Claims 1 to 9, **characterized in that** a clutch actuator (28) is adjusted by means of the DC motor (10) directly without the use of a hydraulic section.

11. Method according to one of Claims 1 to 10, **characterized in that** a clutch actuator (28) which is located in a gear mechanism housing (58) is adjusted by means of the DC motor (10), the centre axis (62) of said clutch actuator being congruent with the axis (60) of the DC motor (10) which is arranged directly on the gear mechanism housing (58).

## Revendications

1. Procédé pour déplacer une pièce (28), qui est déplacée au moyen d'un moteur à courant continu sans balais (10) avec au moins une
phase d'enroulement (50), au moins un capteur de position (36), une commande de collecteur (38) et une unité de régulation (40), la pièce (28), notamment un actionneur d'un véhicule automobile, étant déplacée en deux phases, le moteur à courant continu (10) commutant automatiquement dans la première phase de marche rapide (54) et étant commuté en mode de moteur pas à pas dans la deuxième phase de positionnement fin (56), **caractérisé en ce que**
dans la phase de marche rapide (54), seulement un signal de capteur est envoyé à l'unité de régulation (40), et dans la phase de positionnement fin (56), au moins deux signaux de capteur pour la détection de position sont envoyés à l'unité de régulation (40).

2. Procédé selon la revendication 1, **caractérisé en ce que** dans la phase de marche rapide (54) à commutation automatique, une rotation du moteur est mesurée au moyen de l'au moins un capteur de position (36), et un signal de mesure est acheminé à la commande de collecteur (38), qui commute automatiquement avec la rotation du moteur le sens du courant de l'au moins une phase d'enroulement (50).

3. Procédé selon l'une quelconque des revendications 1 ou 2, **caractérisé en ce que** dans la phase de marche rapide (54), dans le cas d'une tension ou d'un courant prédéfini(e), une vitesse de déplacement maximale de la pièce (28) s'ajuste sur la base d'une charge du moteur s'exerçant par le déplacement.

4. Procédé selon l'une quelconque des revendications 1 à 3, **caractérisé en ce que** dans la phase de positionnement fin (56), chaque étape de la rotation du moteur est commandée individuellement par le biais de l'unité de régulation (40).

5. Procédé selon l'une quelconque des revendications 1 à 4, **caractérisé en ce que** dans la phase de positionnement fin (56), pour chaque étape, un courant déterminé pour l'au moins une phase d'enroulement (50) est appliqué, lequel correspond à un couple maximal du moteur à courant continu (10) à appliquer.

6. Procédé selon l'une quelconque des revendications 1 à 5, **caractérisé en ce que** pour établir la transition entre les deux phases, une valeur (52) prédéfinie modifiable est mémorisée dans une mémoire (42) de l'unité de régulation (40).

7. Procédé selon l'une quelconque des revendications 1 à 6, **caractérisé en ce que** la pièce (28) est déplacée dans la phase de positionnement fin (56) avec une précision de positionnement qui correspond à la précision de résolution de l'au moins un capteur de position (36).

8. Procédé selon l'une quelconque des revendications 1 à 7, **caractérisé en ce que** le moteur à courant continu (10) présente au moins un capteur de Hall (36), dont le signal est acheminé d'une part en vue de la commutation sans balai de la commande de collecteur (38), et d'autre part en tant que signal de position à l'unité de régulation (40).

9. Procédé selon l'une quelconque des revendications 1 à 8, **caractérisé en ce que** pour une puissance de calcul donnée, la vitesse de déplacement de la pièce (28) est adaptée aux entrées du signal de capteur de l'unité de régulation (40) devant être traitées.

10. Procédé selon l'une quelconque des revendications 1 à 9, **caractérisé en ce qu'**un actionnement d'embrayage (28) est déplacé directement sans utiliser de section hydraulique au moyen du moteur à courant continu (10).

11. Procédé selon l'une quelconque des revendications 1 à 10, **caractérisé en ce qu'**un actionneur d'embrayage (28) se trouvant dans un boîtier de transmission (58) est déplacé au moyen du moteur à courant continu (10), son axe médian (62) se situant en coïncidence avec l'axe (60) du moteur à courant continu (10) disposé directement sur le boîtier de transmission (58).
